# EUROPÄISCHE PATENTSCHRIFT

(11) **EP 0 704 454 B1**
(45) Veröffentlichungstag und Bekanntmachung des Hinweises auf die Patenterteilung: **08.08.2001**
(21) Anmeldenummer: 95114876.6
(22) Anmeldetag: 21.09.1995
(51) Int. Cl.: C07F 17/00

(54) **Verfahren zur Herstellung verbrückter Metallocene**
Process for the preparation of a bridged metallocene
Procédé pour la préparation d'un métallocène ponté

(30) Priorität: 28.09.1994 DE 4434640
(43) Veröffentlichungstag der Anmeldung: 03.04.1996
(73) Patentinhaber: Basell Polyolefine GmbH, 77694 Kehl (DE)
(72) Erfinder: Aulbach, Michael, Dr., D-65719 Hofheim (DE); Küber, Frank, Dr., D-61440 Oberursel (DE)

(56) Entgegenhaltungen:
- EP-A- 0 316 155
- EP-A- 0 344 887
- EP-A- 0 485 823
- BURGER P ET AL: "ANSA-METALLOCENE DERIVATIVES XXIII ARYL-SUBSTITUTED TITANOCENE AND ZIRCONOCENE COMPLEXES WITH INTERANNULAR TETRAMETHYLETHANO-OR DIMETHYLSILANO-BRIDGES. CRYSTAL STRUCTURES OF REPRESENTATIVE EXAMPLES" JOURNAL OF ORGANOMETALLIC CHEMISTRY, Bd. 417, Nr. 1 / 02, 1. Oktober 1991, Seiten 9-27, XP000328881
- SPALECK W ET AL: "THE INFLUENCE OF AROMATIC SUBSTITUENTS ON THE POLYMERIZATION BEHAVIOR OF BRIDGED ZIRCONOCENE CATALYSTS" ORGANOMETALLICS, Bd. 13, 1994, Seiten 954-963, XP000196987

## Beschreibung

Die vorliegende Erfindung betrifft ein in-situ-Verfahren zur Herstellung von verbrückten Metallocenen, die als Katalysatorkomponenten für die Olefinpolymerisation verwendet werden können.

Verbrückte Metallocene werden insbesondere zusammen mit Aluminoxan als hochaktive Katalysatorkomponente bei der Olefinpolymerisation eingesetzt (EP 129 368). Dabei finden insbesondere silicium- und germaniumverbrückte Metallocene Verwendung (EP 336 127, EP 336 128, EP 485 823). Die Synthese dieser Metallocene erfolgt entsprechend der Literatur in einer zweistufigen Synthese (Organomet. 1994, 13, 954 - 963; ibid, 964 - 970). Dabei wird in der ersten Stufe durch Umsetzung von zwei Äquivalenten eines unsubstituierten oder substituierten Cyclopentadiens mit einem Verbrückungsreagenz, wie z.B. Dialkyldichlorsilan, Dialkyldichlorgermanium oder 1,2-Dibromethan das verbrückte Ligandsystem aufgebaut. Dieses wird isoliert und in der folgenden zweiten Stufe nach Deprotonierung mit starken Basen mit Metallverbindungen, wie z.B. TiCl₄, ZrCl₄, Zr(NMe₂)₄ zu einem verbrückten Metallocen umgesetzt. Nachteil dieser zweistufigen Synthese ist, daß zur Isolierung des verbrückten Ligandsystems die Reaktionsmischung aufgearbeitet und anschließend das verbrückte Ligandsystem durch Kristallisation oder Chromatographie gereinigt werden muß, was einen zusätzlichen Arbeits- und Kostenaufwand bedeutet.

In EP 344 887 wird ein Verfahren zur Herstellung eines siliciumverbrückten Metallocens beschrieben, wobei die Reaktion in drei verschiedenen Reaktionsgefäßen durchgeführt wird. Außerdem muß die Übergangsmetallkomponente ZrCl₄·2THF bei sehr tiefen Temperaturen separat hergestellt werden.

Es bestand nun die Aufgabe, ein einfaches und kostengünstiges Verfahren zur Herstellung von verbrückten Metallocenen zu entwickeln, das die aus dem Stand der Technik bekannten Nachteile vermeidet.

Überraschend wurde gefunden, daß diese Aufgabe durch ein technisch einfach zu handhabendes in-situ-Verfahren gelöst wird, bei dem ein substituiertes Cyclopentadien in situ zu einem verbrückten Metallocen umgesetzt wird.

Die vorliegende Erfindung betrifft somit ein in-situ-Verfahren zur Herstellung eines verbrückten Metallocens, dadurch gekennzeichnet, daß ein substituiertes Cyclopentadien A, gegebenenfalls eine Cyclopentadienylverbindung B, mindestens eine Base, mindestens ein Verbrückungsreagenz ZYₙ und mindestens eine Metallkomponente miteinander umgesetzt werden.

Bevorzugt werden in dem erfindungsgemäßen in-situ-Verfahren nacheinander folgende Schritte durchgeführt:
a) ein substituiertes Cyclopentadien A wird mit einer Base deprotoniert und dann mit einem Verbrückungsreagenz ZYₙ umgesetzt,
b) gegebenenfalls wird eine zweite, unsubstituierte oder substituierte Cyclopentadienylverbindung B, welche ein von dem Cyclopentadien A verschiedenes Substitutionsmuster aufweist, zugegeben, und
c) es wird erneut eine Base und dann eine Metallkomponente MXₚ zugegeben.

Zur Herstellung von verbrückten Metallocenen mit gleichen Cyclopentadienyl-liganden besteht eine bevorzugte Ausführungsform des erfindungsgemäßen in-situ-Verfahrens darin, daß ein substituiertes Cyclopentadien A mit einer Base deprotoniert und dann mit einem Verbrückungsreagenz ZYₙ zu einem verbrückten Ligandsystem umgesetzt wird, welches anschließend ohne Isolierung des verbrückten Ligandsystems erneut mit einer Base deprotoniert und mit einer Metallkomponente MXₚ zu einem verbrückten Metallocen umgesetzt wird.

Das in dem erfindungsgemäßen Verfahren eingesetzte substituierte Cyclopentadien A weist bevorzugt die Formel la auf 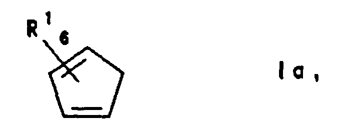 worin die Reste
- R¹: gleich oder verschieden sind und ein Wasserstoffatom, Halogenatom, eine C₁-C₃₀-Kohlenwasserstoffgruppe wie eine C₁-C₂₅-Alkylgruppe welche linear, verzweigt, cyclisch oder substituiert cyclisch sein kann, eine C₁-C₁₅-Alkylalkenyl-, C₆-C₂₄-Aryl- oder C₇-C₃₀-Arylalkylgruppe, oder eine C₁-C₁₂-Alkoxygruppe ist, oder zwei oder mehr benachbarte Reste R¹ ein C₄-C₂₄-Ringsystem bilden können, welches seinerseits substituiert sein kann, oder eine R'₃Si-Gruppe bedeutet, worin R' gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe bedeuten, wobei mindestens zwei Reste R¹ ein Wasserstoffatom sind und mindestens ein Rest R¹ von einem Wasserstoffatom verschieden ist.

Das substituierte Cyclopentadien A der Formel la trägt als Substituenten bevorzugt einen oder mehrere C₁-C₃₀-Kohlenwasserstoffreste. Beispiele solcher Cyclopentadiene A der Formel la sind 2-Methylcyclopentadien, Methyl-tert.-butylcyclopentadien, tert.-Butylcyclopentadien, Isopropylcyclopentadien, Dimethylcyclopentadien, Trimethylethylcyclopentadien, 5-Phenylcyclopentadien, Diphenylcyclopentadien, Inden, 2-Methylinden, 2-Ethylinden, 3-Methylinden, 3-tert.-Butylinden, 2-Methyl-4-phenylinden, 2-Ethyl-4-phenylinden, 2-Methyl-4-naphthyl-inden, 2-Methyl-4-isopropylinden, Benzoinden, 2-Methyl-4,5-benzoinden, 2-Methyl-*a*-acenaphthinden, 2-Methyl-4,6-di-isopropylinden, Fluoren, 4-Methylfluoren oder 2,7-Di-tert.-butylfluoren. Besonders bevorzugt sind Indenderivate. Bevorzugt tragen die Indenderivate am Fünfring, insbesondere in 2-Position, einen C₁-C₁₀-Kohlenwasserstoffrest wie C₁-C₁₀-Alkyl und sind am Sechsring entweder unsubstituiert oder tragen einen oder mehrere C₁-C₂₀-Kohlenwasserstoffreste wie C₁-C₁₀-Alkyl, C₆-C₂₀-Aryl (z.B. Phenyl oder Naphthyl) oder zwei oder mehr der C₁-C₂₀-Kohlenwasserstoffreste bilden ein Ringsystem.

Die gegebenenfalls eingesetzte unsubstituierte oder substituierte Cyclopentadienylverbindung B weist bevorzugt die Formel Ib auf 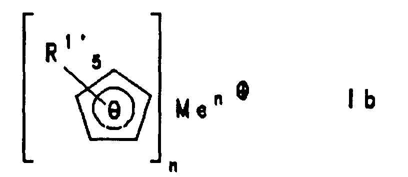 worin die Reste
- R^{1'}: gleich oder verschieden sind und ein Wasserstoffatom, Halogenatom, eine C₁-C₃₀-Kohlenwasserstoffgruppe wie eine C₁-C₂₅-Alkylgruppe welche linear, verzweigt, cyclisch oder substituiert cyclisch sein kann, eine C₁-C₁₅-Alkylalkenyl-, C₆-C₂₄-Aryl- oder C₇-C₃₀-Arylalkylgruppe, oder eine C₁-C₁₂-Alkoxygruppe ist, oder zwei oder mehr benachbarte Reste R^{1'} ein C₄-C₂₄-Ringsystem bilden können, welches seinerseits substituiert sein kann, oder eine R'₃Si-Gruppe bedeutet, worin R' gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe bedeuten, wobei mindestens ein Rest R^{1'} ein Wasserstoffatom ist und
- Me: ein n-wertiges Metall ist und n gleich 1 oder 2 ist. Me ist bevorzugt ein Alkalimetall wie Lithium, Natrium oder Kalium oder ein Erdalkalimetall wie Magnesium.

Die Cyclopentadienylgruppe der Cyclopentadienylverbindung B der Formel Ib ist bevorzugt substituiert und trägt als Substituenten bevorzugt einen oder mehrere C₁-C₃₀-Kohlenwasserstoffreste. Beispiele solcher Cyclopentadienylgruppen sind 2-Methylcyclopentadienyl, Methyl-tert.-butylcyclopentadienyl, tert.-Butylcyclopentadienyl, Isopropylcyclopentadienyl, Dimethylcyclopentadienyl, Trimethylethylcyclopentadienyl, 5-Phenylcyclopentadienyl, Diphenylcyclopentadienyl, Indenyl, 2-Methylindenyl, 2-Ethylindenyl, 3-Methylindenyl, 3-tert.-Butylindenyl, 2-Methyl-4-phenylindenyl, 2-Ethyl-4-phenylindenyl, 2-Methyl-4-naphthyl-indenyl, 2-Methyl-4-isopropylindenyl, Benzoindenyl, 2-Methyl-4,5-benzoindenyl, 2-Methyl-*a*-acenaphthindenyl, 2-Methyl-4,6-di-isopropylindenyl, Fluorenyl, 4-Methylfluorenyl oder 2,7-Di-tert.-butylfluorenyl. Besonders bevorzugt sind Indenylderivate. Bevorzugt tragen die Indenylderivate am Fünfring, insbesondere in 2-Position, einen C₁-C₁₀-Kohlenwasserstoffrest wie C₁-C₁₀-Alkyl und sind am Sechsring entweder unsubstituiert oder tragen einen oder mehrere C₁-C₂₀-Kohlenwasserstoffreste wie C₁-C₁₀-Alkyl, C₆-C₂₀-Aryl (z.B. Phenyl oder Naphthyl) oder zwei oder mehr der C₁-C₂₀-Kohlenwasserstoffreste bilden ein Ringsystem.

Als Verbrückungsreagenz werden bevorzugt Verbindungen der Formel ZYₙ eingesetzt, worin Z 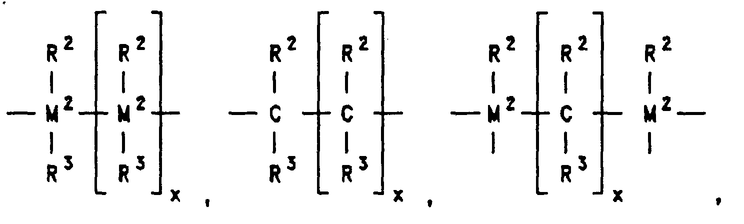 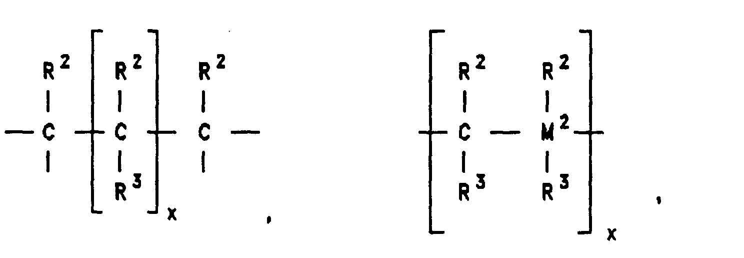 =BR², = AIR², -Ge-, -O-, -S-, =SO, = SO₂, = NR², =CO, = PR² oder =P(O)R² ist, worin R² und R³ gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe bedeuten, oder zwei oder mehr Reste R² und R³ jeweils mit den sie verbindenden Atomen einen oder mehrere Ringe bilden,
- M²: gleich oder verschieden Silizium, Germanium oder Zinn ist, x eine ganze Zahl von Null bis 18 ist,
- Y: gleich oder verschieden eine Abgangsgruppe wie ein Halogenatom oder ein Tosylat sind, und n gleich 2 oder 4 ist.

Als Basen werden bevorzugt Alkylalkalimetall-Verbindungen wie Alkyllithium-Verbindungen eingesetzt, z.B. Methyllithium und Butyllithium, es können aber auch reine Metalle, wie z.B. Lithium und Natrium verwendet werden. Prinzipiell können alle Basen verwendet werden, die im Stande sind, die C-H - aciden Cyclopentadiene bzw. Cyclopentadienyle wie substituiertes Cyclopentadien(yl), substituiertes oder unsubstituiertes Inden(yl) oder substituiertes oder unsubstituiertes Fluoren(yl) zu deprotonieren.

Als Metallkomponente wird in dem erfindungsgemäßen Verfahren bevorzugt eine Verbindung der Formel MXₚ eingesetzt, worin
- M: ein Metall der Gruppe IIIb, IVb, Vb, Vlb des Periodensystems der Elemente ist,
- X: ein Halogenatom oder eine NR"₂ -Gruppe ist, wobei R" gleich oder verschieden sind und ein Wasserstoffatom, ein Halogenatom oder einer C₁-C₄₀ kohlenstoffhaltigen Gruppe wie eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe bedeuten, und
- p: eine ganze Zahl von 2 bis 6 ist.

Bevorzugt werden in dem erfindungsgemäßen in-situ-Verfahren verbrückte Metallocene der Formel II hergestellt 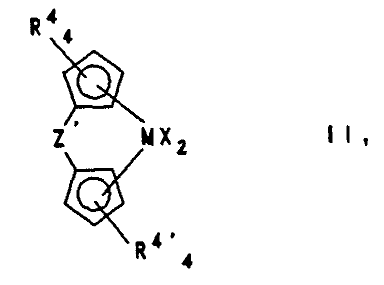 worin
- R⁴ und R^{4'}: gleich oder verschieden ein Wasserstoffatom, Halogenatom, eine C₁-C₃₀-Kohlenwasserstoffgruppe wie C₁-C₂₅-Alkyl, z.B. C₄-C₁₂-Cycloalkyl, das seinerseits ein C₁-C₁₂-Alkyl als Substituent tragen kann, C₁-C₁₅-Alkylalkenyl, C₆-C₂₄-Aryl, C₇-C₃₀-Arylalkyl,
C₁-C₁₂-Alkoxy oder zwei oder mehr benachbarte Reste gemeinsam ein C₄-C₂₄-Ringsystem bilden können, welches seinerseits substituiert sein kann, eine R'₃Si-Gruppe bedeutet, worin R' gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe bedeuten, und R⁴ und R^{4'} mit Z' verbunden sein können,
- Z': 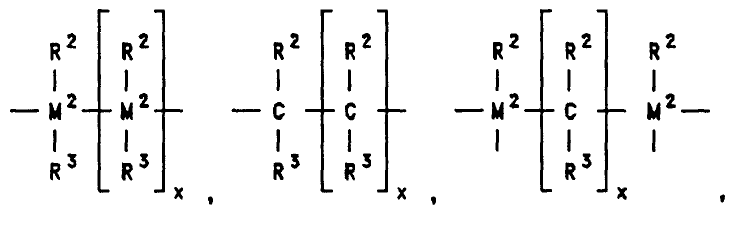 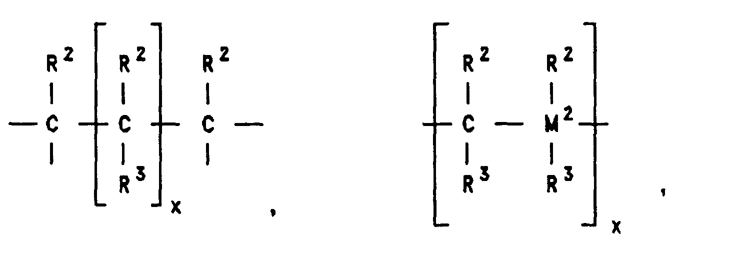 = BR², =AlR², -Ge-, -O-, -S-, =SO, = SO₂, = NR², =CO, =PR² oder = P(O)R² ist, worin R² und R³ gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe bedeuten, oder zwei oder mehr Reste R² und R³ jeweils mit den sie verbindenden Atomen einen oder mehrere Ringe bilden,
- M²: gleich oder verschieden Silizium, Germanium oder Zinn ist, und x eine ganze Zahl von Null bis 18 ist,
- M: Titan, Zirkonium, Hafnium ist, und X gleich oder verschieden ein Halogenatom oder ein C₁-C₂₀-Kohlenwasserstoffrest wie C₁-C₁₀-Alkyl ist.

Besonders bevorzugt werden Metallocene der Formel II hergestellt, worin
- R⁴ und R^{4'}: gleich oder verschieden ein Wasserstoffatom, Halogenatom, C₁-C₁₂-Alkoxy, lineares oder verzweigtes C₁-C₁₅-Alkyl, C₄-C₁₂-Cycloalkyl, das seinerseits C₁-C₁₂ Alkyl als Substituenten tragen kann, C₁-C₁₅-Alkylalkenyl, C₆-C₂₄-Aryl oder Arylalkyl, wobei zwei benachbarte Reste ein C₄-C₂₄-Ringsystem bilden können, welches seinerseits substituiert sein kann, eine R'₃Si-Gruppe bedeutet, worin R' eine C₁-C₁₀-Alkylgruppe ist, und R⁴ und R^{4'} mit Z' zyklisch verbunden sein können,
- Z': SiR²R³ ist oder eine Einheit Si-(CR²R³)ₓ-Si bedeutet, die zwei Metallocenfragmente miteinander verknüpft, wobei R² und R³ gleich oder verschieden sind und C₁-C₁₀-Alkyl oder C₆-C₁₀-Aryl bedeuten, und x bevorzugt 0, 2 oder 6 ist,
- M: Zirkonium ist und X ein Chloratom ist.

Besonders bevorzugt werden Metallocene der Formel II hergestellt worin die beiden Cyclopentadienylgruppen gleich sind und substituiert sind. Als Substituenten tragen die Cyclopentadienylgruppen bevorzugt einen oder mehrere C₁-C₃₀-Kohlenwasserstoffreste. Beispiele solcher Cyclopentadienylgruppen sind 2-Methylcyclopentadienyl, Methyl-tert.-butylcyclopentadienyl, tert.-Butylcyclopentadienyl, Isopropylcyclopentadienyl, Dimethylcyclopentadienyl, Trimethylethylcyclopentadienyl, 5-Phenylcyclopentadienyl, Diphenylcyclopentadienyl, Indenyl, 2-Methylindenyl, 2-Ethylindenyl, 3-Methylindenyl, 3-tert.-Butylindenyl, 2-Methyl-4-phenylindenyl, 2-Ethyl-4-phenylindenyl, 2-Methyl-4-naphthyl-indenyl, 2-Methyl-4-isopropylindenyl, Benzoindenyl, 2-Methyl-4,5-benzoindenyl, 2-Methyl-*a*-acenaphthindenyl, 2-Methyl-4,6-di-isopropylindenyl, Fluorenyl, 4-Methylfluorenyl oder 2,7-Di-tert.-butylfluorenyl. Besonders bevorzugt sind Indenylderivate. Bevorzugt tragen die Indenylderivate am Fünfring, insbesondere in 2-Position (benachbart zur Verbrückung Z), einen C₁-C₁₀-Kohlenwasserstoffrest wie C₁-C₁₀-Alkyl und sind am Sechsring entweder unsubstituiert oder tragen einen oder mehrere C₁-C₂₀-Kohlenwasserstoffreste wie C₁-C₁₀-Alkyl, C₆-C₂₀-Aryl (z.B. Phenyl oder Naphthyl) oder zwei oder mehr der C₁-C₂₀-Kohlenwasserstoffreste bilden ein Ringsystem.

Beispiele für nach dem erfindungsgemäßen Verfahren erhältliche Metallocene, insbesondere solche der Formel II, sind:
Dimethylsilandiylbis(2-methyl-indenyl)ZrCl₂;
DimethylsilandiylbisindenylZrCl₂;
Dimethylsilandiylbis(2-methyl-4,5-benzoindenyl)ZrCl₂;
Dimethylsilandiyl(2-methyl-4,5-benzoindenyl)(2-methyl-indenyl)ZrCl₂;
Dimethylsilandiyl(2-methyl-4,5-benzoindenyl)(2-methyl-4-phenylindenyl)ZrCl₂;
Dimethylsilandiyl(2-methylindenyl)(4-phenylindenyl)ZrCl₂;
Dimethylsilandiylbis(2-methyl-4-phenyl-indenyl)ZrCl₂;
Dimethylsilandiylbis(2-ethyl-4-phenyl-indenyl)ZrCl₂;
Dimethylsilandiylbis(2-methyl-4,6-diisopropyl-indenyl)ZrCl₂;
Dimethylsilandiylbis(2-methyl-4-naphthyl-indenyl)ZrCl₂;
Dimethylsilandiylbis(2-ethyl-4-naphthyl-indenyl)ZrCl₂;
Phenylmethylsilandiylbis(2-methyl-indenyl)ZrCl₂;
Phenylmethylsilandiylbisindenyl)ZrCl₂;
Phenylmethylsilandiylbis(2-methyl-4,5-benzoindenyl)ZrCl₂;
Phenylmethylsilandiyl(2-methyl-4,5-benzoindenyl)(2-methyl-indenylZrCl₂;
Phenylmethylsilandiyl(2-methyl-4,5-benzoindenyl)(2-methyl-4-phenylindenyl)ZrCl₂;
Phenylmethylsilandiyl(2-methylindenyl)(4-phenylindenyl)ZrCl₂;
Phenylmethylsilandiylbis(2-methyl-4-phenyl-indenyl)ZrCl₂;
Phenylmethylsilandiylbis(2-methyl-4,6-diisopropyl-indenyl)ZrCl₂;
Phenylmethylsilandiylbis(2-methyl-4-naphthyl-indenyl)ZrCl₂;
Diphenylsilandiylbis(2-methyl-4,5-benzoindenyl)ZrCl₂;
Ethylenbis(2-methyl-indenyl)ZrCl₂;
EthylenbisindenylZrCl₂;
Ethylenbis(2-methyl-4,5-benzoindenyl)ZrCl₂;
Ethylen(2-methyl-4,5-benzoindenyl)(2-methyl-indenylZrCl₂;
Ethylen(2-methyl-4,5-benzoindenyl)(2-methyl-4-phenylindenyl)ZrCl₂;
Ethylen(2-methylindenyl)(4-phenylindenyl)ZrCl₂;
Ethylenbis(2-methyl-4-phenyl-indenyl)ZrCl₂;
Ethylenbis(2-methyl-4,6-diisopropyl-indenyl)ZrCl₂;
Ethylenbis(2-methyl-4-naphthyl-indenyl)ZrCl₂;
Dimethylsilandiylbis(2,3,5-trimethylcyclopentadienyl)ZrCl₂;
1,6-{Bis[methylsilyl-bis(2-methyl-4-phenyl-indenyl)ZrCl₂]}hexan;
1,6-{Bis[methylsilyl-bis(2-ethyl-4-phenyl-indenyl)ZrCl₂]}hexan;
1,6-{Bis[methylsilyl-bis(2-methyl-4-naphthyl-indenyl)ZrCl₂]}hexan;
1,6-{Bis[methylsilyl-bis(2-methyl-4,5-benzoindenyl)ZrCl₂]}hexan;
1,6-{Bis[methylsilyl-bis(2-methyl-4,6-diisopropylindenyl)ZrCl₂]}hexan;
1,2-{Bis[methylsilyl-bis(2-methyl-4-phenyl-indenyl)ZrCl2]}ethan;
1,2-{Bis[methylsilyl-bis(2-ethyl-4-phenyl-indenyl)ZrCl₂]}ethan;
1,2-{Bis[methylsilyl-bis(2-methyl-4-naphthyl-indenyl)ZrCl₂]}ethan;
1,2-{Bis[methylsilyl-bis(2-methyl-4,5-benzoindenyl)ZrCl₂]}ethan;
1,2-{Bis[methylsilyl-bis(2-methyl-4,6-diisopropylindenyl)ZrCl₂]}ethan.

In den erfindungsgemäßen Verfahren werden bevorzugt aprotische Lösungsmittel wie Benzol, Toluol, Chlorbenzol, Tetrachlorkohlenstoff, Methylenchlorid oder Di-(C₁-C₁₀)-Alkylether wie Diethylether, Methyl-tert.-butylethyer, Diisopropylether und Tetrahydrofuran verwendet. Besonders bevorzugt wird eine Mischung aus einem unpolaren aprotischen Lösungsmittel (wie Toluol oder einem unpolaren Di-(C₁-C₁₀)Alkylether wie Methyl-tert.-butylether oder Diisopropylether) und einem polaren Ether (wie Tetrahydrofuran) eingesetzt. Die Reaktion wird in einem Temperaturbereich von -70 bis + 100°C, bevorzugt von -40 bis +50°C, insbesondere von -20 bis +30°C, durchgeführt. Die Reaktion kann in einem Druckbereich von 1 bis 500 bar, bevorzugt bei Atmosphärendruck, durchgeführt werden.

Um verbrückte Metallocene, insbesondere der Formel II herzustellen, in denen die beiden Cyclopentadienylliganden gleiche Substitutionsmuster aufweisen, kann - bevorzugt nacheinander - ein Äquivalent eines Cyclopentadienderivats mit 0,9 bis 1,2 Äquivalenten einer Base, 0,4 bis 0,6 Äquivalenten eines Verbrückungsreagenzes, 0,9 bis 1,2 Äquivalenten einer Base und 0,3 bis 0,7 Äquivalenten einer Metallverbindung umgesetzt werden.

Um Metallocene, insbesondere der Formel II herzustellen, in denen die beiden Cyclopentadienylliganden voneinander verschiedene Substitutionsmuster aufweisen, können bevorzugt 0,5 Äquivalente eines Cyclopentadiens A mit 0,4 bis 0,6 Äquivalenten einer Base und anschließend mit 0,9 bis 1,2 Äquivalenten eines Verbrückungsreagenzes umgesetzt werden. Zu dieser Mischung können - vorzugsweise nacheinander - 0,5 Äquivalente einer Cyclopentadienylverbindung B, welche ein vom Cyclopentadien A verschiedenes Substitutionsmuster aufweist, 0,9 bis 1,2 Äquivalente einer Base und 0,3 bis 0,7 Äquivalente einer Metallverbindung zugegeben werden.

Das erfindungsgemäße in-situ-Verfahren hat den Vorteil, daß es in einem einzigen Reaktionsgefäß durchgeführt werden kann und auf eine Isolierung von Zwischenprodukten vollständig verzichtet werden kann. Außerdem kann auf energie- und zeitaufwendige Kühl- und Heizperioden verzichtet und eine hohe Reaktionsausbeute erzielt werden.

Die mit dem erfindungsgemäßen Metallocen-Herstellungsverfahren erhältlichen verbrückten Metallocene können zusammen mit einem Cokatalysator als hochaktive Katalysatorkomponenten z.B. für die Herstellung von Olefinpolymeren eingesetzt werden.

Polymerisiert werden können Olefine, insbesondere solche der Formel R^{a}-CH =CH-R^{b}, worin R^{a} und R^{b} gleich oder verschieden sind und ein Wasserstoffatom oder einen Kohlenwasserstoffrest mit 1 bis 20 Kohlenstoffatomen bedeuten. R^{a} und R^{b} können auch mit den sie verbindenen Kohlenstoffatomen einen Ring bilden. Beispiele für solche Olefine sind Ethylen, Propylen, 1-Buten, 1-Hexen, 1-Octen, 4-Methyl-1-penten, 1,3-Butadien, Isopren, Norbornen, Dimethanooctahydronaphthalin oder Norbornadien. Insbesondere können Propylen und Ethylen homopolymerisiert werden, Ethylen mit einem C₃-C₂₀-Olefin und/oder einem C₄-C₂₀-Dien copolymerisiert werden oder Ethylen mit einem Cycloolefin copolymerisiert werden.

Die Polymerisation kann eine Homo- oder eine Copolymerisation sein und in Lösung, in Suspension oder in der Gasphase, kontinuierlich oder diskontinuierlich, ein- oder mehrstufig bei einer Temperatur von 0 bis 200°C, vorzugsweise 30 bis 100°C durchgeführt werden.

Prinzipiell ist als Cokatalysator in der Polymerisation jede Verbindung geeignet, die aufgrund ihrer Lewis-Acidität das neutrale Metallocen in ein Kation überführen und dieses stabilisieren kann ("labile Koordination). Darüber hinaus soll der Cokatalysator oder das aus ihm gebildete Anion keine weiteren Reaktionen mit dem gebildeten Kation eingehen (EP 427 697). Als Cokatalysator wird bevorzugt eine Aluminiumverbindung und/oder Borverbindung eingesetzt.

Als Cokatalysatoren werden bevorzugt Aluminoxane verwendet (EP-A 129-368), Polyhedron 1990. 9, 429). An Stelle oder neben eines Aluminoxans können Borverbindungen, insbesondere der Formeln RₓNH₄₋ₓBR'₄, RₓPH₄₋ₓBR'₄, R₃CBR'₄ oder BR'₃ als Cokatalysatoren verwendet werden. In diesen Formeln bedeutet x eine ganze Zahl von 1 bis 4, bevorzugt 3, die Reste R sind gleich oder verschieden, bevorzugt gleich, und bedeuten C₁-C₁₀-Alkyl, C₆-C₁₈-Aryl oder 2 Reste R bilden zusammen mit den sie verbundenen Atomen einen Ring, und die Reste R'sind gleich oder verschieden, bevorzugt gleich, und stehen für C₆-C₁₈-Alkyl oder C₆-C₁₈-Aryl, das durch Alkyl, Haloalkyl oder Fluor substituiert sein kann (EP-A 277 003, 277 004, 426 638, 427697).

Es ist möglich, das Metallocen vor dem Einsatz in der Polymerisationsreaktion mit einem Cokatalysator, insbesondere einem Aluminoxan vorzuaktivieren. Dadurch kann die Polymerisationsaktivität deutlich erhöht werden. Die Voraktivierung des Metallocens wird vorzugsweise in Lösung vorgenommen. Bevorzugt wird dabei das Metallocen in eine Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Katalysatoraktivität kann in dem Polymerisationsverfahren Wasserstoff zugegeben werden. Hierdurch können niedermolekulare Polyolefine wie Wachse erhalten werden.

Bevorzugt wird das Metallocen mit dem Cokatalysator außerhalb des Polymerisationsreaktors in einem separaten Schritt unter Verwendung eines geeigneten Lösemittels umgesetzt. Dabei kann eine Trägerung vorgenommen werden.

In dem Verfahren kann mit Hilfe des Metallocens eine Vorpolymerisation erfolgen. Zur Vorpolymerisation wird bevorzugt das (oder eines der) in der Polymerisation eignesetze(n) Olefin(e) verwendet.

Der zur Olefinpolymerisation eingesetzte Katalysator kann geträgert sein. Durch die Trägerung läßt sich beispielsweise die Kornmorphologie des hergestellten Polymers steuern. Dabei kann das Metallocen zunächst mit dem Träger und anschließend mit dem Cokatalysator umgesetzt werden. Es kann auch zunächst der Cokatalysator geträgert werden und anschließend mit dem Metallocen umgesetzt werden. Auch ist es möglich das Reaktionsprodukt von Metallocen und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Vorzugsweise wird der wird der Cokatalysator, z.B. Aluminoxan, auf einen Träger wie beispielsweise Silikagele, Aluminiumoxide, festes Aluminoxan oder andere anorganische Trägermaterialien wie beispielsweise Magnesiumchlorid oder auch ein Polyolefinpulver in feinverteiiter Form aufgebracht und dann mit dem Metallocen umgesetzt.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan genannt. Weiterhin kann auch eine Benzin- bzw. hydrierte Dieselölfraktion benutzt werden. Brauchbar ist auch Toluol. Bevorzugt wird im flüssigen Monomeren polymerisiert.

Durch Anwendung von Wasserstoff oder durch Erhöhung der Polymerisationstemperatur sind auch Polyolefine niedriger Molmasse, wie Wachse zugänglich, deren Härte oder Schmelzpunkt durch den Comonomergehalt variiert werden können. Durch Wahl des Polymerisations-Verfahrens und der Comonomerart(en), sowie Comonomermenge(n) lassen sich Olefincopolymere mit elastomeren Eigenschaften, wie z.B. Ethylen/Propylen/-1,4-Hexadien-Terpolymere herstellen.

Die nachfolgenden Beispiele dienen zur näheren Erläuterung der Erfindung:

Allgemeine Angaben: Herstellung und Handhabung organometallischer Verbindungen erfolgten unter Ausschluß von Luft und Feuchtigkeit unter Schutzgasatmosphäre (Stickstoff, Argon).

### Beispiel 1:

3.50 g (19.4 mmol) 2-Methyl-4,5-benzoinden werden in 500 ml Toluol/25 ml THF vorgelegt und mit 7.46 ml (20 mmol) Butyllithium (2.68 molar in Toluol) bei Raumtemperatur versetzt. Nach einer Stunde Nachrühren werden 1.25 g (9.7 mmol) Dimethyldichlorsilan und anschließend bei Raumtemperatur erneut 7.46 ml (20 mmol) Butyllithium zugegeben. Bei -40°C werden portionsweise 2.2 g (9.4 mmol) Zirkoniumtetrachlorid zugefügt. Man läßt die Suspension über Nacht auf Raumtemperatur erwärmen, filtriert ab und extrahiert die meso-Form mit 50 ml Methylenchlorid. Der Rückstand wird weiterhin mit Methylenchlorid extrahiert, das Filtrat eingeengt und zur Kristallisation bei -30°C gelagert. Man erhält 1.75 g rac-Dimethylsilandiylbis(2-methyl-4,5-benzoindenyl)zirkoniumdichlorid.
Gesamtausbeute: 31 % rac-Dimethylsilandiylbis(2-methyl-4,5-benzoindenyl)zirkoniumdichlorid (bezogen auf eingesetztes 2-Methyl-4,5-benzoinden).

### Beispiel 2 (Vergleichsbeispiel):

a) 4.68 g (26 mmol) 2-Methyl-4,5-benzoinden werden in 50 ml THF vorgelegt und bei Raumtemperatur mit 10.3 ml einer 2.5 molaren Butyllithium-Lösung in Hexan (26 mmol) versetzt. Die Mischung wird eine Stunde bei Raumtemperatur gerührt und anschließend bei Raumtemperatur zu einer Lösung von 1.67 g (13 mmol) Dimethyldichlorsilan in 10 ml THF gegeben. Nach beendeter Zugabe wird die Mischung 5 Stunden gerührt und anschließend auf 100 ml Eiswasser gegossen. Die Mischung wird mehrmals mit Diethylether extrahiert, die vereinigten organischen Phasen über Magnesiumsulfat getrocknet und das Lösungsmittel im Vakuum entfernt. Nach Chromatographie über Kieselgel (Hexan/Ethylacetat 20:1) erhält man 2.38 g (44 %) Dimethylbis(2-methyl-4,5-benzoindenyl)silan.
b) Zu einer Lösung von 1.7 g (4 mmol) Dimethylbis(2-methyl-4,5-benzoindenyl)silan in 20 ml THF werden bei Raumtemperatur 4.0 ml (10 mmol) einer 2.5 molaren Butyllithium-Lösung in Hexan gegeben. Die Mischung wird 2 Stunden gerührt und anschließend das Lösungsmittel im Vakuum entfernt. Der Rückstand wird in 10 ml Hexan aufgeschlämmt, abfiltriert und getrocknet. Das getrocknete Dilithiosalz wird anschließend bei -78°C zu einer Suspension von 0.93 g (4 mmol) Zirkoniumtetrachlorid in 25 ml Methylenchlorid gegeben. Man läßt die Mischung über Nacht auf Raumtemperatur erwärmen, filtriert die gelbe Suspension ab und extrahiert die meso Form mit Toluol. Der Rückstand wird mit 40 ml Methylenchlorid extrahiert, das Filtrat eingeengt und zur Kristallisation bei -30°C gelagert. Man erhält 0.97 g (42 %) rac-Dimethylsilandiylbis(2-methyl-4,5-benzoindenyl)zirkoniumdichlorid.
   Gesamtausbeute: 18.5 % rac-Dimethylsilandiylbis(2-methyl-4,5-benzoindenyl)zirkoniumdichlorid (bezogen auf eingesetztes 2-Methyl-4,5-benzoinden).

### Beispiel 3:

5.00 g (38.4 mmol) 2-Methyliden werden in 300 ml Methyl-tert.-butylether/5 ml Tetryhydrofuran vorgelegt und mit 14.9 ml (40 mmol) Butyllithium (2.68 molar in Toluol) bei Raumtemperatur versetzt. Nach einer Stunde Nachrühren werden 2.50 g (19.4 mmol) Dimethyldichlorsilan und anschließend bei Raumtemperatur erneut 14.9 ml (40 mmol) Butyllithium in Toluol zugegeben. Bei -20°C werden portionsweise 4.40 g (18.8 mmol) Zikroniumtetrachlorid zugefügt. Man läßt die Suspension über Nacht erwärmt, filtriert ab und extrahiert die meso-Form mit 65 ml Methylenchlorid. Der Rückstand wird weiterhin mit Methylenchlorid extrahiert, das Filtrat eingeengt und zur Kristallisation bei -30°C gelagert. Man erhält 2,74 g rac-Dimethylsilandiylbis(2-methylindenyl)zirkoniumdichlorid. Gesamtausbeute: 30 % rac-Dimethylsilandiylbis(2-methylindenyl)zirkoniumchlorid (bezogen auf eingesetztes Inden).

### Beispiel 4 (Vergleichsbeispiel):

a) 10 g (76,8 mmol) 2-Methyliden werden in 100 ml Tetrahydrofuran vorgelegt und bei Raumtemperatur mit 30.7 ml einer 2.5 molaren Butyllithium-Lösung in Hexan (76.8 mmol) versetzt. Die Mischung wird für eine Stunde bei Raumtemperatur gerührt und anschließend bei Raumtemperatur zu einer Lösung von 4.93 g (38.4 mmol) Dimethyldichlorsilan in 40 ml Tetrahydrofuran gegeben. Nach beendeter Zugabe wird noch 4 Stunden bei Raumtemperatur gerührt und anschließend auf 250 ml Eiswasser gegossen. Die Mischung wird mehrmals mit Diethylether extrahiert, die vereinigten organischen Phasen über Magnesiumsulfat getrocknet und das Lösungsmittel im Vakuum entfernt. Nach Chromatographie über Kieselgel (Hexan/Ethylacetat 35:1) enthält man 6.07 g (50 %) Dietmethylbis(2-methylindenyl)silan.
b) Zu einer Lösung von 6.07 g (19.2 mmol) Dimethylbis(2-methylindenyl)silan in 80 ml Tetrahydrofuran werden bei Raumtemperatur 15.3 ml (38.4 mmol) einer 2.5 molaren Buthyllithium-Lösung in Hexan gegeben. Die Mischung wird für zwei Stunden refluxiert und anschließend das Lösungsmittel im Vakuum entfernt. Der Rückstand wird in 30 ml Hexan aufgeschlämmt, abfiltriert und getrocknet. Das getrocknete Dilithiosalz wird anschließend bei -78°C zu einer Suspension von 4.47 g (19.2 mmol) Zirkoniumtetrachlorid in 50 ml Methylenchlorid gegeben. Man läßt die Mischung über Nacht auf Raumtemperatur erwärmen, filtriert die gelbe Suspension ab und extrahiert die meso-Form mit Toluol. Der Rückstand wird mit 70 ml Methylenchlorid extrahiert, das Filtrat eingeengt und zur Kristallisation bei -30°C gelagert. Man erhält 3.20 g (35 %) rac-Dimethylsilandiylbis(2-methylindenyl)zirkoniumdichlorid.
   Gesamtausbeute: 17.5 % rac-Dimethylsilandiylbis(2-methylindenyl)zirkoniumchlorid (bezogen auf eingesetztes 2-Methylinden).

## Patentansprüche

1. In situ-Verfahren zur Herstellung eines verbrückten Metallocens, wobei ein substituiertes Cyclopentadien A, mindestens eine Base, mindestens ein Verbrückungsreagenz, ZYₙ worin Z 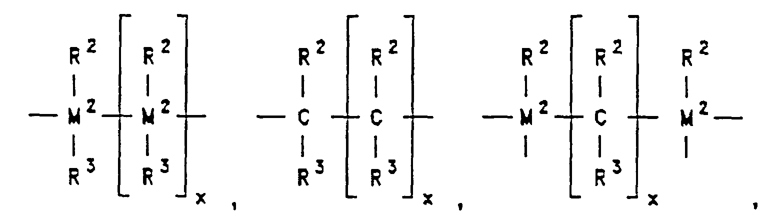 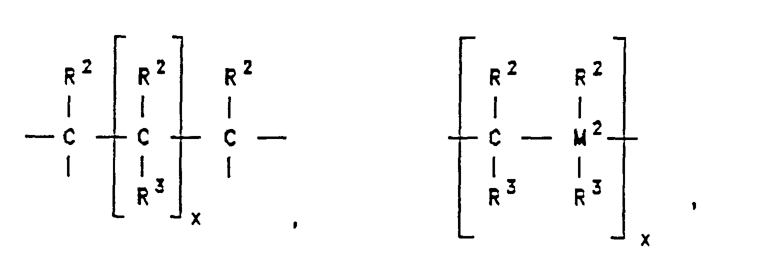 =BR², =AIR², -Ge-, -O-, -S-, =SO, =SO₂, =NR², =CO, =PR² oder =P(O)R² ist, worin R² und R³ gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe bedeuten, oder zwei oder mehr Reste R² und R³ jeweils mit den sie verbindenden Atomen einen oder mehrere Ringe bilden,
M² gleich oder verschieden Silizium, Germanium oder Zinn ist,
x eine ganze Zahl von Null bis 18 ist,
Y gleich oder verschieden eine Abgangsgruppe wie ein Halogenatom oder ein Tosylat sind, und n gleich 2 oder 4 ist, mindestens eine Metallkomponente MXₚ, worin
M ein Metall der Gruppe IIIb, IVb, Vb, Vlb des Periodensystems der Elemente ist,
X ein Halogenatom oder eine NR"₂ -Gruppe ist, wobei R" gleich oder verschieden sind und ein Wasserstoffatom, ein Halogenatom oder einer C₁-C₄₀ kohlenstoffhaltigen Gruppe wie eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe bedeuten, und
p eine ganze Zahl von 2 bis 6 ist, und gegebenenfalls eine unsubstituierte oder substituierte Cyclopentadienylverbindung B, in situ miteinander umgesetzt werden.

2. In situ-Verfahren gemäß Anspruch 1, wobei nacheinander folgende Schritte durchgeführt werden:
a) ein substituiertes Cyclopentadien A wird mit einer Base deprotoniert und dann mit einem Verbrückungsreagenz ZYₙ umgesetzt,
b) gegebenenfalls wird eine zweite unsubstituierte oder substituierte Cyclopentadienylverbindung B, welche ein von dem Cyclopentadien A verschiedenes Substitutionsmuster aufweist, zugegeben, und
c) es wird erneut eine Base und dann eine Metallkomponente MXₚ zugegeben wird.

3. In-situ-Verfahren gemäß Anspruch 1 oder 2 zur Herstellung eines verbrückten Metallocens mit gleichen Cyclopentadienylliganden, wobei ein substituiertes Cyclopentadien A mit einer Base deprotoniert und dann mit einem Verbrückungsreagenz ZYₙ zu einem verbrückten Ligandsystem umgesetzt wird, welches anschließend ohne Isolierung des verbrückten Ligandsystems erneut mit einer Base deprotoniert und mit einer Metallkomponente MXₚ zu einem verbrückten Metallocen mit gleichen Cyclopentadienylliganden umgesetzt wird.

4. In-situ-Verahren gemäß einem oder mehreren der Ansprüche 1 bis 3, worin das substituierte Cyclopentadien A eine Verbindung der Formel la ist, 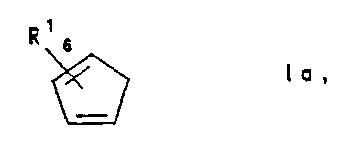 worin die Reste
R¹ gleich oder verschieden sind und ein Wasserstoffatom, Halogenatom, eine C₁-C₃₀-Kohlenwasserstoffgruppe wie eine C₁-C₂₅-Alkylgruppe welche linear, verzweigt, cyclisch oder substituiert cyclisch sein kann, eine C₁-C₁₅-Alkylalkenyl-, C₆-C₂₄-Aryl- oder C₇-C₃₀-Arylalkylgruppe, oder eine C₁-C₁₂-Alkoxygruppe ist, oder zwei oder mehr benachbarte Reste R¹ ein C₄-C₂₄-Ringsystem bilden können, welches seinerseits substituiert sein kann, oder eine R'₃Si-Gruppe bedeutet, worin R' gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe bedeuten, und mindestens zwei Reste R¹ ein Wasserstoffatom sind und mindestens ein Rest R¹ von einem Wasserstoffatom verschieden ist.

5. In-situ-Verfahren gemäß einem oder mehreren der Ansprüche 1 bis 4, worin das Verbrückte Metallocen
Dimethylsilandiylbis(2-methyl-indenyl)ZrCl₂;
DimethylsilandiylbisindenylZrCl₂;
Dimethylsilandiylbis(2-methyl-4,5-benzoindenyl)ZrCl₂;
Dimethylsilandiyl(2-methyl-4,5-benzoindenyl)(2-methyl-indenyl)ZrCl₂;
Dimethylsilandiyl(2-methyl-4,5-benzoindenyl)(2-methyl-4-phenylindenyl)ZrCl₂;
Dimethylsilandiyl(2-methylindenyl)(4-phenylindenyl)ZrCl₂;
Dimethylsilandiylbis(2-methyl-4-phenyl-indenyl)ZrCl₂;
Dimethylsilandiylbis(2-ethyl-4-phenyl-indenyl)ZrCl₂;
Dimethylsilandiylbis(2-methyl-4,6-diisopropyl-indenyl)ZrCl₂;
Dimethylsilandiylbis(2-methyl-4-naphthyl-indenyl)ZrCl₂;
Dimethylsilandiylbis(2-ethyl-4-naphthyl-indenyl)ZrCl₂;
Phenylmethylsilandiylbis(2-methyl-indenyl)ZrCl₂;
Phenylmethylsilandiylbisindenyl)ZrCl₂;
Phenylmethylsilandiylbis(2-methyl-4,5-benzoindenyl)ZrCl₂;
Phenylmethylsilandiyl(2-methyl-4,5-benzoindenyl)(2-methyl-indenylZrCl₂;
Phenylmethylsilandiyl(2-methyl-4,5-benzoindenyl)(2-methyl-4-phenylindenyl)ZrCl₂;
Phenylmethylsilandiyl(2-methylindenyl)(4-phenylindenyl)ZrCl₂;
Phenylmethylsilandiylbis(2-methyl-4-phenyl-indenyl)ZrCl₂;
Phenylmethylsilandiylbis(2-methyl-4,6-diisopropyl-indenyl)ZrCl₂;
Phenylmethylsilandiylbis(2-methyl-4-naphthyl-indenyl)ZrCl₂;
Diphenylsilandiylbis(2-methyl-4,5-benzoindenyl)ZrCl₂;
Ethylenbis(2-methyl-indenyl)ZrCl₂;
EthylenbisindenylZrCl₂;
Ethylenbis(2-methyl-4,5-benzoindenyl)ZrCl₂;
Ethylen(2-methyl-4,5-benzoindenyl)(2-methyl-indenylZrCl₂;
Ethylen(2-methyl-4,5-benzoindenyl)(2-methyl-4-phenylindenyl)ZrCl₂;
Ethylen(2-methylindenyl) (4-phenylindenyl)ZrCl₂;
Ethylenbis(2-methyl-4-phenyl-indenyl)ZrCl₂;
Ethylenbis(2-methyl-4,6-diisopropyl-indenyl)ZrCl₂;
Ethylenbis(2-methyl-4-naphthyl-indenyl)ZrCl₂;
Dimethylsilandiylbis(2,3,5-trimethylcyclopentadienyl)ZrCl₂;
1,6-{Bis[methylsilyl-bis(2-methyl-4-phenyl-indenyl)ZrCl₂]}hexan;
1,6-{Bis[methylsilyl-bis(2-ethyl-4-phenyl-indenyl)ZrCl₂]}hexan;
1,6-{Bis[methylsilyl-bis(2-methyl-4-naphthyl-indenyl)ZrCl₂]}hexan;
1,6-{Bis[methylsilyl-bis(2-methyl-4,5-benzoindenyl)ZrCl₂]}hexan;
1,6-{Bis[methylsilyl-bis(2-methyl-4,6-diisopropylindenyl)ZrCl₂]}hexan;
1,2-{Bis[methylsilyl-bis(2-methyl-4-phenyl-indenyl)ZrCl₂]}ethan;
1,2-{Bis[methylsilyl-bis(2-ethyl-4-phenyl-indenyl)ZrCl₂]}ethan;
1,2-{Bis[methylsilyl-bis(2-methyl-4-naphthyl-indenyl)ZrCl₂]}ethan;
1,2-{Bis[methylsilyl-bis(2-methyl-4,5-benzoindenyl)ZrCl₂]}ethan;
1,2-{Bis[methylsilyl-bis(2-methyl-4,6-diisopropylindenyl)ZrCl₂]}ethan ist.

## Claims

1. An in-situ process for preparing a bridged metallocene, which comprises reacting a substituted cyclopentadiene A, at least one base, at least one bridging reagent ZYₙ
where Z is 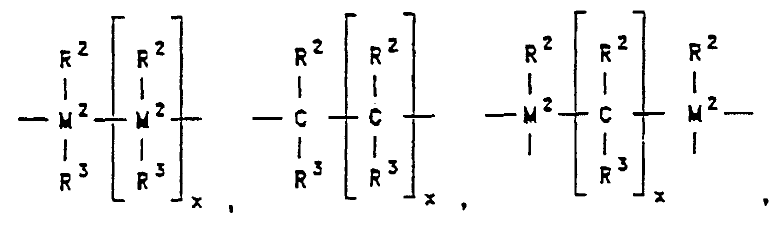 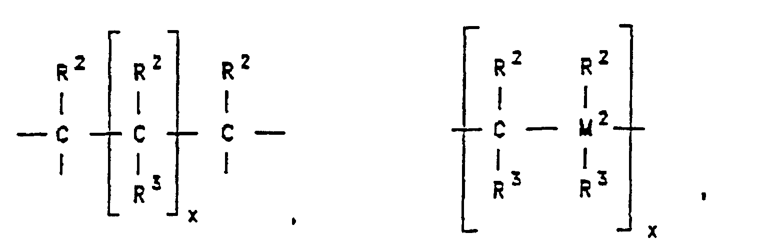 =BR², =AlR², -Ge-, -O-, -S-, =SO, =SO₂, =NR², =CO, =PR² or =P(O)R², where R² and R³ are identical or different and are each a hydrogen atom, a halogen atom, a C₁-C₂₀-alkyl, a C₁-C₁₀-fluoroalkyl, a C₁-C₁₀-alkoxy, a C₆-C₁₄-aryl, a C₆-C₁₀-fluoroaryl, a C₆-C₁₀-aryloxy, a C₂-C₁₀-alkenyl, a C₇-C₄₀-arylalkyl, a C₇-C₄₀-alkylaryl or a C₈-C₄₀-arylalkenyl group, or two or more radicals R² and R³ together with the atoms connecting them form one or more rings,
M² are identical or different and are each silicon, germanium or tin,
x is an integer from zero to 18,
Y are identical or different and are each a leaving group such as a halogen atom or a tosylate, and
n is equal to 2 or 4, at least one metal component MXₚ, where
M is a metal of group IIIb, IVb, Vb, VIb of the Periodic Table of the Elements,
X is a halogen atom or an NR"₂ group, where R" are identical or different and are each a hydrogen atom, a halogen atom or a C₁-C₄₀-carbon-containing group such as a C₁-C₂₀-alkyl, a C₁-C₁₀-fluoroalkyl, a C₁-C₁₀-alkoxy, a C₆-C₁₄-aryl, a C₆-C₁₀-fluoroaryl, a C₆-C₁₀-aryloxy, a C₂-C₁₀-alkenyl, a C₇-C₄₀-arylalkyl, a C₇-C₄₀-alkylaryl or a C₈-C₄₀-arylalkenyl group, and
p is an integer from 2 to 6,
and, if desired, an unsubstituted or substituted cyclopentadienyl compound B in situ.

2. The in-situ process as claimed in claim 1, wherein the following steps are carried out in succession:
a) a substituted cyclopentadiene A is deprotonated with a base and then reacted with a bridging reagent ZYₙ,
b) if desired, a second, unsubstituted or substituted cyclopentadienyl compound B which has a substitution pattern different from the cyclopentadiene A is added, and
c) a base is again added and then a metal component MXₚ is added.

3. The in-situ process as claimed in claim 1 or 2 for preparing a bridged metallocene having identical cyclopentadienyl ligands, wherein a substituted cyclopentadiene A is deprotonated with a base and then reacted with a bridging reagent ZYₙ to give a bridged ligand system which is subsequently, without isolation of the bridged ligand system, again deprotonated with a base and reacted with a metal component MXₚ to give a bridged metallocene having identical cyclopentadienyl ligands.

4. The in-situ process as claimed in one or more of claims 1 to 3, wherein the substituted cyclopentadiene A is a compound of the formula Ia 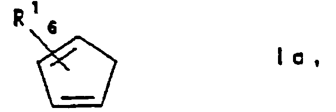 where the radicals
R¹ are identical or different and are each a hydrogen atom, a halogen atom, a C₁-C₃₀-hydrocarbon group such as a C₁-C₂₅-alkyl group which may be linear, branched, cyclic or substituted cyclic, a C₁-C₁₅-alkylalkenyl, C₆-C₂₄-aryl or C₇-C₃₀-arylalkyl group, or a C₁-C₁₂-alkoxy group, or two or more adjacent radicals R¹ can form a C₄-C24-ring system which in turn can be substituted, or an R'₃Si group where R' are identical or different and are each a hydrogen atom, a halogen atom, a C₁-C₂₀-alkyl, a C₁-C₁₀-fluoroalkyl, a C₁-C₁₀-alkoxy, a C₆-C₁₄-aryl, a C₆-C₁₀-fluoroaryl, a C₆-C₁₀-aryloxy, a C₂-C₁₀-alkenyl, a C₇-C₄₀-arylalkyl, a C₇-C₄₀-alkylaryl or a C₈-C₄₀-arylalkenyl group, and at least two radicals R¹ are hydrogen atoms and at least one radical R¹ is different from a hydrogen atom.

5. The in-situ process as claimed in one or more of claims 1 to 4, wherein the bridged metallocene is
dimethylsilanediylbis(2-methylindenyl)ZrCl₂;
dimethylsilanediylbisindenylZrCl₂;
dimethylsilanediylbis(2-methyl-4,5-benzoindenyl)ZrCl₂;
dimethylsilanediyl(2-methyl-4,5-benzoindenyl)(2-methylindenyl)ZrCl₂;
dimethylsilanediyl(2-methyl-4,5-benzoindenyl)(2-methyl-4-phenylindenyl)ZrCl₂;
dimethylsilanediyl(2-methylindenyl)(4-phenylindenyl)ZrCl₂;
dimethylsilanediylbis(2-methyl-4-phenylindenyl)ZrCl₂;
dimethylsilanediylbis(2-ethyl-4-phenylindenyl)ZrCl₂;
dimethylsilanediylbis(2-methyl-4,6-diisopropylindenyl)ZrCl₂;
dimethylsilanediylbis(2-methyl-4-naphthylindenyl)ZrCl₂;
dimethylsilanediylbis(2-ethyl-4-naphthylindenyl)ZrCl₂;
phenylmethylsilanediylbis(2-methylindenyl)ZrCl₂;
phenylmethylsilanediylbisindenylZrCl₂;
phenylmethylsilanediylbis(2-methyl-4,5-benzoindenyl)ZrCl₂;
phenylmethylsilanediyl(2-methyl-4,5-benzoindenyl)(2-methylindenyl)ZrCl₂;
phenylmethylsilanediyl(2-methyl-4,5-benzoindenyl)(2-methyl-4-phenylindenyl)ZrCl₂;
phenylmethylsilanediyl(2-methylindenyl)(4-phenylindenyl)ZrCl₂;
phenylmethylsilanediylbis(2-methyl-4-phenylindenyl)ZrCl₂;
phenylmethylsilanediylbis(2-methyl-4,6-diisopropylindenyl)ZrCl₂;
phenylmethylsilanediylbis(2-methyl-4-naphthylindenyl)ZrCl₂;
diphenylsilanediylbis(2-methyl-4,5-benzoindenyl)ZrCl₂;
ethylenebis(2-methylindenyl)ZrCl₂;
ethylenebisindenylZrCl₂;
ethylenebis(2-methyl-4,5-benzoindenyl)ZrCl₂;
ethylene(2-methyl-4,5-benzoindenyl)(2-methylindenyl)ZrCl₂;
ethylene(2-methyl-4,5-benzoindenyl)(2-methyl-4-phenylindenyl)ZrCl₂;
ethylene(2-methylindenyl)(4-phenylindenyl)ZrCl₂;
ethylenebis(2-methyl-4-phenylindenyl)ZrCl₂;
ethylenebis(2-methyl-4,6-diisopropylindenyl)ZrCl₂;
ethylenebis(2-methyl-4-naphthylindenyl)ZrCl₂;
dimethylsilanediylbis(2,3,5-trimethylcyclopentadienyl)ZrCl₂;
1,6-bis[methylsilylbis(2-methyl-4-phenylindenyl)ZrCl₂]hexane;
1,6-bis[methylsilylbis(2-ethyl-4-phenylindenyl)ZrCl₂]hexane;
1,6-bis[methylsilylbis(2-methyl-4-naphthylindenyl)ZrCl₂]hexane;
1,6-bis[methylsilylbis(2-methyl-4,5-benzoindenyl)ZrCl₂]hexane;
1,6-bis[methylsilylbis(2-methyl-4,6-diisopropylindenyl)ZrCl₂]hexane;
1,2-bis[methylsilylbis(2-methyl-4-phenylindenyl)ZrCl₂]ethane;
1,2-bis[methylsilylbis(2-ethyl-4-phenylindenyl)ZrCl₂]ethane;
1,2-bis[methylsilylbis(2-methyl-4-naphthylindenyl)ZrCl₂]ethane;
1,2-bis[methylsilylbis(2-methyl-4,5-benzoindenyl)ZrCl₂]ethane;
1,2-bis[methylsilylbis(2-methyl-4,6-diisopropylindenyl)ZrCl₂]ethane.

## Revendications

1. Procédé *in situ* de préparation d'un métallocène ponté, dans lequel on met à réagir *in situ* un cyclopentadiène A substitué, au moins une base, au moins un réactif de pontage, ZYₙ
dans lequel Z est 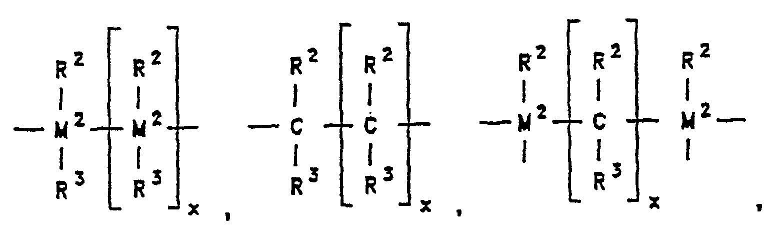 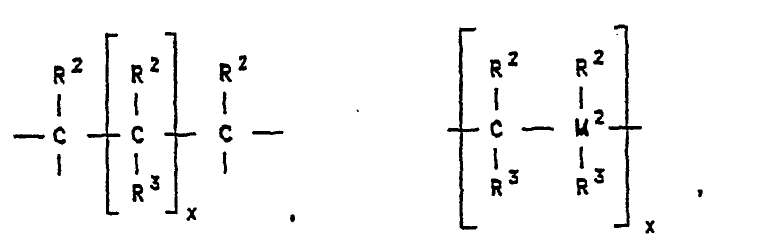 =BR², =AlR², -Ge-, -O-, -S-, =SO, =SO₂, =NR², =CO, =PR², ou =P(O)R², dans lesquels R² et R³ sont identiques ou différents et représentent un atome d'hydrogène, un atome d'halogène, un groupe alkyle en C₁ à C₂₀, fluoroalkyle en C₁ à C₁₀, alcoxy en C₁ à C₁₀, aryle en C₆ à C₁₄, fluoroaryle en C₆ à C₁₀, aryloxy en C₆ à C₁₀, alcényle en C₂ à C₁₀, arylalkyle en C₇ à C₄₀, alkylaryle en C₇ à C₄₀, arylalcényle en C₈ à C₄₀, ou bien deux ou plusieurs résidus R² et R³ forment respectivement avec les atomes auxquels ils sont liés, un ou plusieurs cycles,
M² sont identiques ou différents, représentent un atome de silicium, de germanium ou d'étain,
X est un nombre entier de 0 à 18,
Y sont identiques ou différents et représentent un groupe quittant comme un atome d'halogène ou un groupe tosylate et n est égal à 2 ou 4,
au moins un composant métallique MXₚ, dans lequel
M est un métal du Groupe IIIb, IVb, Vb, VIb du Tableau Périodique des Eléments,
X est un atome d'halogène ou un groupe NR"₂, dans lequel R" sont identiques ou différents et représentent un atome d'hydrogène, un atome d'halogène, ou un groupe carboné en C₁ à C₄₀, comme un groupe alkyle en C₁ à C₂₀, fluoroalkyle en C₁ à C₁₀, alcoxy en C₁ à C₁₀, aryle en C₆ à C₁₄, fluoroaryle en C₆ à C₁₀, aryloxy en C₆ à C₁₀, alcényle en C₂ à C₁₀, arylalkyle en C₇ à C₄₀, alkylaryle en C₇ à C₄₀, ou arylalcényle en C₈ à C₄₀, et
p est un nombre entier de 2 à 6,
et éventuellement un composé cyclopentadiényle B substitué ou non substitué.

2. Procédé *in situ* selon la revendication 1, dans lequel l'on réalise les étapes successives suivantes :
a) un cyclopentadiène substitué A est déprotoné avec une base, puis mis à réagir avec un réactif de pontage ZYₙ,
b) éventuellement un deuxième composé cyclopentadiényle B non substitué ou substitué est ajouté, qui présente un motif de substitution différent de celui du cyclopentadiène A, et
c) il est ajouté à nouveau une base, puis un composant métallique MXₚ.

3. Procédé *in situ* selon la revendication 1 ou 2, de préparation d'un métallocène ponté ayant des ligands cyclopentadiényle identiques, dans lequel un cyclopentadiène A substitué est déprotoné avec une base, puis mis à réagir avec un réactif de pontage ZYₙ, en obtenant un système de ligands pontés, qui ensuite est déprotoné à nouveau avec une base sans isoler le système de ligands pontés, et qui est mis à réagir avec un composant métallique MXₚ, en obtenant un métallocène ponté ayant des ligands cyclopentadiényle identiques.

4. Procédé *in situ* selon une quelconque ou plusieurs de revendications 1 à 3, dans lequel le cyclopentadiène substitué A est un composé de formule Ia 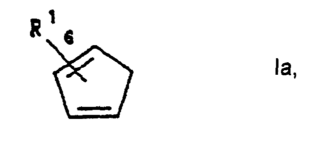 dans laquelle les résidus
R¹ sont identiques ou différents et représentent un atome d'hydrogène, un atome d'halogène, un groupe hydrocarboné en C₁ à C₃₀, comme un groupe alkyle en C₁ à C₂₅, qui peut être linéaire, ramifié, cyclique ou à substitution cyclique, un groupe alkylalcényle en C₁ à C₁₅, aryle en C₆ à C₂₄, ou arylalkyle en C₇ à C₃₀, ou un groupe alcoxy en C₁ à C₁₂, ou bien deux ou plusieurs résidus R¹ voisins peuvent former un système cyclique en C₄ à C₂₄, lequel peut de son côté être substitué, ou représente un groupe R'₃Si, dans lequel les R' sont identiques ou différents et représentent un atome d'hydrogène, un atome d'halogène, un groupe alkyle en C₁ à C₂₀, fluoroalkyle en C₁ à C₁₀, alcoxy en C₁ à C₁₀, aryle en C₆ à C₁₄, fluoroaryle en C₆ à C₁₀, aryloxy en C₆ à C₁₀, alcényle en C₂ à C₁₀, arylalkyle en C₇ à C₄₀, alkylaryle en C₇ à C₄₀, ou arylalcényle en C₈ à C₄₀, et au moins deux des résidus R¹ représentent un atome d'hydrogène et au moins un résidu R¹ est différent d'un atome d'hydrogène.

5. Procédé *in situ* selon l'une quelconque ou plusieurs des revendications 1 à 4, dans lequel le métallocène ponté est
le diméthylsilane-diylbis(2-méthyl-indényl)ZrCl₂;
le diméthylsilane-diylbisindényl)ZrCl₂;
le diméthylsilane-diylbis(2-méthyl-4,5-benzo-indényl)-ZrCl₂;
le diméthylsilane-diyl(2-méthyl-4,5-benzoindényl)(2-méthylindényl)ZrCl₂;
le diméthylsilane-diyl(2-méthyl-4,5-benzoindényl)(2-méthyl-4-phénylindényl)ZrCl₂;
le diméthylsilane-diyl(2-méthyl-indényl)(4-phényl-indényl)ZrCl₂;
le diméthylsilane-diylbis(2-méthyl-4-phényl-indényl)-ZrCl₂;
le diméthylsilane-diylbis(2-éthyl-4-phényl-indényl)ZrCl₂;
le diméthylsilane-diylbis(2-méthyl-4,6-diisopropyl-indényl)ZrCl₂;
le diméthylsilane-diylbis(2-méthyl-4-naphtyl-indényl)ZrCl₂;
le diméthylsilane-diylbis(2-éthyl-4-naphtyl-indényl)ZrCl₂;
le phénylméthylsilane-diylbis(2-méthyl-indényl)ZrCl₂;
le phénylméthylsilane-diylbis(indényl)ZrCl₂;
le phénylméthylsilane-diylbis(2-méthyl-4,5-benzo-indényl)ZrCl₂;
le phénylméthylsilane-diyl(2-méthyl-4,5-benzo-indényl)(2-méthylindényl)ZrCl₂;
le phénylméthylsilane-diyl(2-méthyl-4,5-benzo-indényl)(2-méthyl-4-phénylindényl)ZrCl₂;
le phénylméthylsilane-diyl(2-méthyl-indényl)(4-phénylindényl)ZrCl₂;
le phénylméthylsilane-diylbis(2-méthyl-4-phényl-indényl)ZrCl₂;
le phénylméthylsilane-diylbis(2-méthyl-4,6-diisopropylindényl)ZrCl₂;
le phénylméthylsilane-diylbis(2-méthyl-4-naphtyl-indényl)ZrCl₂;
le diphénylsilane-diylbis(2-méthyl-4,5-benzo-indényl)ZrCl₂;
l'éthylène-bis(2-méthyl-indényl)ZrCl₂;
l'éthylène-bis(indényl)ZrCl₂;
l'éthylène-bis(2-méthyl-4,5-benzoindényl) ZrCl₂;
l'éthylène-(2-méthyl-4,5-benzoindényl)(2-méthylindényl)ZrCl₂;
l'éthylène-(2-méthyl-4,5-benzoindényl)(2-méthyl-4-phénylindényl)ZrCl₂;
l'éthylène-(2-méthylindényl)(4-phénylindényl)ZrCl₂;
l'éthylène-bis(2-méthyl-4-phényl-indényl)ZrCl₂;
l'éthylène-bis(2-méthyl-4,6-diisopropyl-indényl)ZrCl₂;
l'éthylène-bis(2-méthyl-4-naphtyl-indényl)ZrCl₂;
le diméthylsilane-diylbis(2,3,5-triméthylcyclopenta-diényl)ZrCl₂;
le 1,6-{bis[méthylsilyl-bis(2-méthyl-4-phényl-indényl)ZrCl₂]}hexane;
le 1,6-{bis[méthylsilyl-bis(2-éthyl-4-phényl-indényl)ZrCl₂]}hexane;
le 1,6-{bis[méthylsilyl-bis(2-méthyl-4-naphtyl-indényl)ZrCl₂]}hexane;
le 1,6-{bis[méthylsilyl-bis(2-méthyl-4,5-benzoindényl)ZrCl₂]}hexane;
le 1,6-{bis[méthylsilyl-bis(2-méthyl-4,6-diisopropylindényl)ZrCl₂]}hexane;
le 1,2-{bis[méthylsilyl-bis(2-méthyl-4-phényl-indényl)ZrCl₂]}éthane;
le 1,2-{bis[méthylsilyl-bis(2-éthyl-4-phényl-indényl)ZrCl₂]}éthane;
le 1,2-{bis[méthylsilyl-bis(2-méthyl-4-naphtylindényl)ZrCl₂]}-éthane;
le 1,2-{bis[méthylsilyl-bis(2-méthyl-4,5-benzoindényl)ZrCl₂]}éthane;
le 1,2-{bis[méthylsilyl-bis(2-méthyl-4,6-diisopropylindényl)ZrCl₂]}éthane.
